# EUROPEAN PATENT APPLICATION

(11) **EP 4 254 889 A1**
(43) Date of publication of application: **04.10.2023**
(21) Application number: 22165097.1
(22) Date of filing: 29.03.2022
(51) Int. Cl.: H04L 27/26, G01S 5/00, H04L 27/34, H04W 64/00

(54) **METHOD AND APPARATUS FOR OPTIMIZING POSITIONING SIGNAL MAPPING**

(71) Applicant: Robert Bosch GmbH, 70442 Stuttgart (DE)
(72) Inventor: Hassan, Khaled Shawky, 30880 Laatzen (DE); Stark, Maximilian, 20249 Hamburg (DE)

(57) **Abstract**

A method, for example a computer-implemented method, of processing data associated with at least one component of a wireless communications system, the method comprising: modifying at least one of a) a mapping from bits associated with data to be transmitted over the wireless communications system to symbols, b) a mapping of symbols to resources of the wireless communications system, based on at least one of: c1) a first parameter characterizing at least one performance indicator associated with a data transmission over the wireless communications system, c2) a second parameter characterizing at least one performance indicator associated with a positioning technique associated with the data transmission using the wireless communications system.

## Description

### Technical Field

The disclosure relates to a method of processing data associated with at least one component of a wireless communications system.

The disclosure further relates to an apparatus for processing data associated with at least one component of a wireless communications system.

### Summary

Exemplary embodiments relate to a method, for example a computer-implemented method, of processing data associated with at least one component of a wireless communications system, the method comprising: modifying at least one of a) a mapping from bits associated with data to be transmitted over the wireless communications system to symbols, b) a mapping of symbols to resources of the wireless communications system, based on at least one of: c1) a first parameter characterizing at least one performance indicator associated with a data transmission over the wireless communications system, c2) a second parameter characterizing at least one performance indicator associated with a positioning technique associated with the data transmission using the wireless communications system. In some embodiments, this enables to, for example dynamically, e.g. during an operation of at least one component of the wireless communications system, modify a bit-to-symbol mapping and/or a symbol-to-resource mapping, e.g. to improve the data transmission regarding the first parameter and/or the second parameter.

In some embodiments, the wireless communications system may be a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some embodiments, the method may be performed by an apparatus for the wireless communications system such as a terminal device and/or a network device.

In some embodiments, the terminal device may be a user equipment (UE) or a data transceiver modem, which, for example, may be associated with a stationary or mobile object such as e.g. a vehicle, for example car or truck or the like, or with a robot.

In some embodiments, the terminal device may be at least one of: an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some embodiments, the network device is a base station, e.g. for a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some embodiments, the network device may e.g. be a gNB.

In some embodiments, the principle according to the embodiments is applicable to mapping procedures for data transmissions between several terminal devices, e.g. UE, e.g. according to a sidelink transmission scheme.

In some embodiments, the principle according to the embodiments is applicable to mapping procedures for data transmissions between a terminal device, e.g. UE, and a network device, e.g. gNB, e.g. uplink and/or downlink data transmissions.

In some embodiments, the method comprises modifying the mapping from bits associated with data to be transmitted over the wireless communications system to symbols based on at least one of the first parameter and the second parameter. In some embodiments, a, for example conventional, mapping of symbols to resources may be used.

In some embodiments, the method comprises modifying the mapping of symbols to resources of the wireless communications system, based on at least one of the first parameter and the second parameter. In some embodiments, a, for example conventional, mapping from the bits associated with the data to be transmitted over the wireless communications system to the symbols may be used.

In some embodiments, the method comprises modifying both the mapping from bits associated with data to be transmitted over the wireless communications system to symbols and the mapping of the symbols to resources of the wireless communications system based on at least one of the first parameter and the second parameter.

In some embodiments, the modifying based on at least one of the first parameter and the second parameter comprises a modifying based on both the first parameter and the second parameter.

In some embodiments, the method comprises using the symbols for providing positioning reference signals, PRS, for example for joint communication and sensing (e.g., determining a relative distance between a transmitter and a receiver), for example for joint communication and positioning (e.g., determining a position of at least one of a transmitter and a receiver), wherein for example the symbols can be used for both communication and sensing, for example positioning.

In some embodiments, a concept of positioning reference signals according to some accepted standard such as e.g. the concept of positioning reference signals (PRS) according to 5G Release 16 may at least temporarily be enhanced by using the principle according to the embodiments.

In some embodiments, the resources of the wireless communications system comprise at least time resources and frequency resources.

In some embodiments, the first parameter characterizes at least one of: a) a bit error rate, b) a symbol error rate.

In some embodiments, the second parameter characterizes at least one of: a) correlation properties, b) autocorrelation properties, c) cross-correlation properties.

In some embodiments, the method comprises considering channel information of at least one radio channel associated with the wireless communications system for a) the modifying of the mapping from bits associated with data to be transmitted over the wireless communications system to symbols, and/or for b) the modifying of the mapping of symbols to resources of the wireless communications system. In some embodiments, this enables to provide a more precise mapping, e.g. a bit-to-symbol mapping and/or a symbol-to-resource mapping, also taking into consideration a state of a radio channel, e.g. between a transmitter using at least some symbols as obtained by the bit-to-symbol mapping and/or using at least some resources as obtained by the symbol-to-resource mapping, and a receiver receiving a data transmission from such transmitter.

In some embodiments, the channel information of at least one radio channel may e.g. be obtained based on channel state information, CSI, reported by a device, e.g. as specified in some accepted standard.

In some embodiments, the method comprises at least one of: a) modifying, for example optimizing, the mapping from the bits associated with the data to be transmitted over the wireless communications system to the symbols using at least one machine learning technique, b) modifying, for example optimizing, the mapping of the symbols to the resources of the wireless communications system using at least one machine learning technique.

In some embodiments, the method comprises modifying, for example optimizing, at least one of: a) a sequence detector for detecting a sequence based on data received via the wireless communications system, for example based on the data transmission over the wireless communications system, b) a correlation receiver for performing sensing, for example positioning. In some embodiments, this enables to improve signal processing on a receiver side.

In some embodiments, the method comprises using at least one machine learning technique for the modifying, for example optimizing, of the sequence detector and/or of the correlation receiver, wherein for example at least one common machine learning technique is used for, for example jointly, performing a) at least one of the modifying, for example optimizing, of the sequence detector and/or the correlation receiver (e.g., at a receiver side) and b) at least one of the modifying of the mapping from bits associated with data to be transmitted over the wireless communications system to symbols and the mapping of symbols to resources of the wireless communications system (e.g., at a transmitter side).

In some embodiments, the method comprises at least one of: a) transmitting a first signal, for example positioning reference signal, for example for joint communication and sensing, for example for joint communication and positioning, using at least some of the symbols, b) receiving at least one reflected portion of the first signal, c) determining, based at least on the first signal and the reflected portion of the first signal (e.g., based on a correlation of the first signal and the reflected portion of the first signal), a distance between an object at which the least one reflected portion has been reflected and a device that has transmitted the first signal. In some embodiments, this enables sensing (e.g., determining a relative distance between a transmitter and another object, which may be receiver, but which may also be any other object at least partially reflecting the first signal), for example for joint communication and positioning (e.g., determining a position of at least one of a transmitter and a receiver).

In some embodiments, the object at which the least one reflected portion has been reflected may be a device for the wireless communications system, e.g. a receiver (or a, e.g. another, transmitter). In some embodiments, the object at which the least one reflected portion has been reflected may be another device, e.g. not usable and/or provided for the wireless communications system, such as e.g. an obstacle, e.g. vehicle or robot or structure such as a building.

In some embodiments, at least some components, for example all components, which are configured to use at least one machine learning technique, for example for at least one of the aforementioned aspects of modifying, for example optimizing, e.g., "trainable components", may be trained, for example independently.

In some embodiments, however, it is also possible to design at least some of the trainable components, e.g. for a transmitter side and for a receiver side, jointly, e.g. to be configured for a joint modification, e.g. optimization, e.g. by joint training using at least one machine learning technique.

As an example, in some embodiments, an autoencoder approach can be employed. In some embodiments, an autoencoder is a trainable device where an input is encoded by an encoder stage into a latent space such that, e.g. after an external distortion, a decoder stage of the autoencoder is able to reproduce the input to the encoder stage at the output of the decoder stage.

In some embodiments, a training used for the at least one machine learning technique may be done based on, for example state-of-the-art, stochastic gradient descent techniques. In some embodiments, a possible neural network architecture e.g. usable for a transmitter side and/or a receiver side, is a multi-layer perceptron-type network or a feedforward neural network.

Further exemplary embodiments relate to a method, for example a computer-implemented method, of processing data associated with at least one component of a wireless communications system, the method comprising: modifying, for example optimizing, at least one of: a) a sequence detector for detecting a sequence based on data received via the wireless communications system, for example based on a data transmission over the wireless communications system, b) a correlation receiver for performing sensing, for example positioning, wherein for example the method comprises: using at least one machine learning technique for the modifying, for example optimizing, of the sequence detector and/or of the correlation receiver, wherein for example at least one common machine learning technique is used for, for example jointly, performing a) at least one of the modifying, for example optimizing, of the sequence detector and/or the correlation receiver and b) at least one of modifying a mapping from bits associated with data to be transmitted over the wireless communications system to symbols and a mapping of symbols associated with the data to be transmitted over the wireless communications system to resources of the wireless communications system. In other words, in some embodiments, aspects of some exemplary embodiments may be implemented on and/or for a receiver side, e.g. without providing for modifying, e.g. optimizing, one or more mapping aspects at a transmitter side. In some embodiments, this receiver-side centric approach may improve joint communication and sensing, for example joint communication and positioning.

Further exemplary embodiments relate to a method, for example a computer-implemented method, of processing data associated with at least one component of a wireless communications system, the method comprising at least one of: a) transmitting a first signal, for example positioning reference signal, for example for joint communication and sensing, for example for joint communication and positioning, using at least some of the symbols, b) receiving at least one reflected portion of the first signal, c) determining, based at least on the first signal and the reflected portion of the first signal, a distance between an object at which the least one reflected portion has been reflected and a device that has transmitted the first signal. In other words, in some embodiments, aspects of some exemplary embodiments may be implemented, e.g. at a transmitter side, e.g. without providing for modifying, e.g. optimizing, one or more mapping aspects at a transmitter side. In some embodiments, this approach may at least sometimes e.g. improve sensing-related aspects.

Further exemplary embodiments relate to an apparatus configured to perform the method according to the embodiments.

In some embodiments, the apparatus may be configured to perform the method according to at least some of the claims 1 to 10.

In some embodiments, the apparatus may be configured to perform the method according to at least claim 11.

In some embodiments, the apparatus may be configured to perform the method according to at least claim 12.

In some embodiments, the apparatus may be configured to perform the method according to at least some of the claims 1 to 10 and according to claim 11 and/or claim 12.

Further exemplary embodiments relate to a terminal device, e.g. user equipment, for a wireless communication system, comprising at least one apparatus according to the embodiments.

Further exemplary embodiments relate to a network device, e.g. gNB, for a wireless communication system, comprising at least one apparatus according to the embodiments.

Further exemplary embodiments relate to a wireless communication system comprising at least one apparatus according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the wireless communication system according to the embodiments and/or of the computer program according to the embodiments and/or of the computer-readable storage medium according to the embodiments and/or of the data carrier signal according to the embodiments for at least one of: a) modifying, for example optimizing, for example using at least one machine learning technique for, at least one of a1) the mapping from bits associated with data to be transmitted over the wireless communications system to symbols, a2) the mapping of symbols to resources of the wireless communications system, b) providing a trainable device for a or the the wireless communications system that is configured to learn and/or produce a signal, for example waveform, enabling joint communication and sensing, for example joint communication and positioning, c) providing a trainable device for a or the the wireless communications system that is configured to use a received signal for joint communication and sensing, for example joint communication and positioning, wherein for example the device is trainable to modify, for example optimize, a detection of at least one sequence within the received signal and/or a correlation of the at least one sequence, for example with a reference sequence, d) providing a trainable device for a or the the wireless communications system that is configured to receive at least one reflected portion of a transmitted first signal, and to determine, based at least on the first signal and the reflected portion of the first signal, a distance between an object at which the least one reflected portion has been reflected and a device that has transmitted the first signal, wherein for example the device is trainable to modify, for example optimize, a correlation of the reflected portion with the first signal, e) optimizing a usage of the resources of the wireless communications network for transmitting signals, for example reference signals, that can be used for joint communication and sensing, for example joint communication and positioning, f) providing a trainable resource grid mask for characterizing time and frequency resources of the wireless communications network to be used for reference signals that are usable for joint communication and sensing, for example joint communication and positioning, g) simultaneously improving, for example optimizing, a performance of at least one device for the wireless communications network regarding both the first parameter and the second parameter, h) considering both the first parameter and the second parameter for, for example dynamically, optimizing at least one of h1) symbol values of symbols used for reference signals that are usable for joint communication and sensing, for example for joint communication and positioning, h2) resource elements used for reference signals that are usable for joint communication and sensing, for example for joint communication and positioning.

### Brief Description of Exemplary Figures

Some exemplary embodiments will now be described with reference to the accompanying drawings, in which:
- Fig. 1: schematically depicts a simplified flow-chart according to exemplary embodiments,
- Fig. 2: schematically depicts a simplified block diagram according to exemplary embodiments,
- Fig. 3: schematically depicts a simplified flow-chart according to exemplary embodiments,
- Fig. 4: schematically depicts a simplified flow-chart according to exemplary embodiments,
- Fig. 5: schematically depicts a simplified flow-chart according to exemplary embodiments,
- Fig. 6: schematically depicts a simplified flow-chart according to exemplary embodiments,
- Fig. 7: schematically depicts a simplified block diagram according to exemplary embodiments,
- Fig. 8: schematically depicts a simplified block diagram according to exemplary embodiments,
- Fig. 9A: schematically depicts a simplified block diagram according to exemplary embodiments,
- Fig. 9B: schematically depicts a simplified block diagram according to exemplary embodiments,
- Fig. 10: schematically depicts time/frequency resources according to exemplary embodiments,
- Fig. 11: schematically depicts resources according to exemplary embodiments,
- Fig. 12: schematically depicts a table characterizing a resource allocation,
- Fig. 13: schematically depicts a simplified block diagram according to exemplary embodiments,
- Fig. 14: schematically depicts a simplified block diagram according to exemplary embodiments,
- Fig. 15: schematically depicts a simplified block diagram according to exemplary embodiments,
- Fig. 16: schematically depicts a simplified block diagram according to exemplary embodiments,
- Fig. 17: schematically depicts a simplified signaling diagram according to exemplary embodiments,
- Fig. 18: schematically depicts a simplified signaling diagram according to exemplary embodiments,
- Fig. 19: schematically depicts a simplified block diagram according to exemplary embodiments,
- Fig. 20: schematically depicts a simplified block diagram according to exemplary embodiments,
- Fig. 21: schematically depicts a simplified block diagram according to exemplary embodiments,
- Fig. 22: schematically depicts aspects of use according to exemplary embodiments.

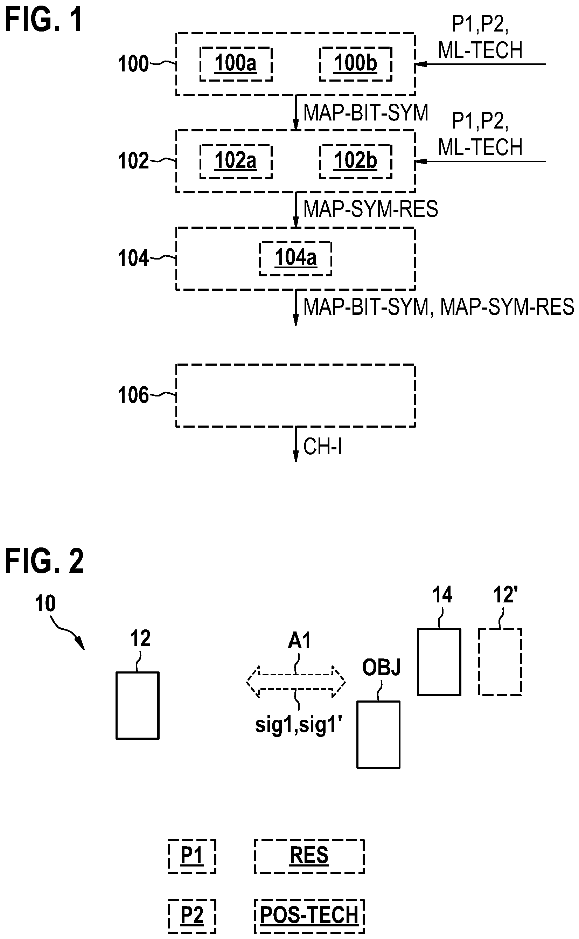

Exemplary embodiments, Fig. 1, relate to a method, for example a computer-implemented method, of processing data associated with at least one component of a wireless communications system 10 (Fig. 2), the method comprising: modifying 100, 102 (Fig. 1) at least one of a) a mapping MAP-BIT-SYM from bits associated with data to be transmitted over the wireless communications system 10 to symbols (e.g., constellation symbols associated with a modulation and/or coding scheme, e.g. for a data transmission A1), b) a mapping MAP-SYM-RES of symbols (e.g., symbols as obtained by the mapping MAP-BIT-SYM and/or other symbols) to resources RES (Fig. 2) of the wireless communications system 10, based on at least one of: c1) a first parameter P1 characterizing at least one performance indicator associated with the data transmission A1 over the wireless communications system, c2) a second parameter P2 characterizing at least one performance indicator associated with a positioning technique POS-TECH associated with the data transmission A1 using the wireless communications system 10. Note that block 100 of Fig. 1 symbolizes the modifying of the mapping MAP-BIT-SYM, while block 102 of Fig. 1 symbolizes the modifying of the mapping MAP-SYM-RES. In some embodiments, the modifying 100, 102 enables to, for example dynamically, e.g. during an operation of at least one component 12, 14 of the wireless communications system 10, modify a bit-to-symbol mapping MAP-BIT-SYM and/or a symbol-to-resource MAP-SYM-RES mapping, e.g. to improve the data transmission A1 regarding the first parameter P1 and/or the second parameter P2.

In some embodiments, Fig. 2, the wireless communications system 10 may be a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology. In other exemplary embodiments (not shown), the principle according to the embodiments may also be applicable to other types of communication systems than cellular communications systems.

In some embodiments, Fig. 2, the method as e.g. exemplified by Fig. 1 may be performed by an apparatus or device for the wireless communications system such as a terminal device 12, 12' and/or a network device 14.

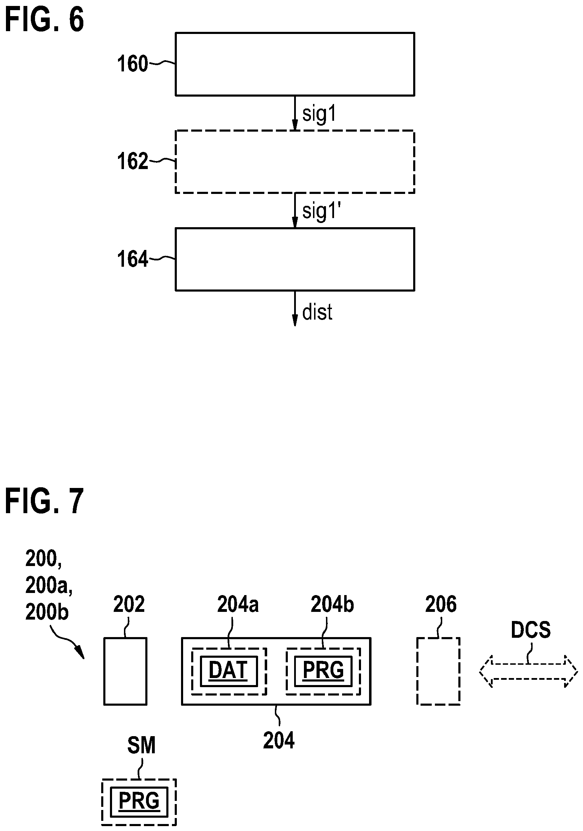

In some embodiments, Fig. 7, an apparatus 200 may be provided, which is configured to perform at least some aspects of the method according to the embodiments. In some embodiments, the apparatus 200 or its functionality may e.g. be provided in at least one component 12, 12', 14 of the wireless communications system 10.

In some embodiments, Fig. 2, the terminal device 12 may be a user equipment (UE) or a data transceiver modem, which, for example, may be associated with a stationary or mobile object such as e.g. a vehicle, for example car or truck or the like, or with a robot (not shown in Fig. 2).

In some embodiments, Fig. 2, the terminal device 12 may be at least one of: an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some embodiments, Fig. 2, the network device 14 is a base station, e.g. for a wireless, for example cellular, communications system 10, which is for example based on and/or adheres at least partially to at least one third generation partnership project, 3GPP, radio standard such as 4G (fourth generation), 5G (fifth generation), 6G (sixth generation) or other radio access technology.

In some embodiments, the network device 14 may e.g. be a gNB.

In some embodiments, the principle according to the embodiments is applicable to mapping procedures for data transmissions A1 between several terminal devices, e.g. UE, 12, 12' e.g. according to a sidelink transmission scheme.

In some embodiments, the principle according to the embodiments is applicable to mapping procedures for data transmissions A1 between a terminal device, e.g. UE, 12 and a network device, e.g. gNB, 14, e.g. uplink and/or downlink data transmissions.

In some embodiments, Fig. 1, the method comprises modifying 100 the mapping MAP-BIT-SYM from bits associated with data to be transmitted over the wireless communications system 10 (Fig. 2) to symbols based on at least one of the first parameter P1 and the second parameter P2. In some embodiments, a, for example conventional, mapping (not shown) of symbols to resources may be used, e.g. instead of using block 102 of Fig. 1.

In some embodiments, Fig. 1, the method comprises modifying 102 the mapping MAP-SYM-RES of symbols to resources of the wireless communications system 10, based on at least one of the first parameter P1 and the second parameter P2. In some embodiments, a, for example conventional, mapping (not shown) from the bits associated with the data to be transmitted over the wireless communications system 10 to the symbols may be used, e.g. instead of using block 100 of Fig. 1.

In some embodiments, Fig. 1, the method comprises modifying both the mapping MAP-BIT-SYM from bits associated with data to be transmitted over the wireless communications system 10 to symbols and the mapping MAP-SYM-RES of the symbols to resources RES of the wireless communications system based on at least one of the first parameter P1 and the second parameter P2. In other words, in some embodiments, both modifying blocks 100, 102 of Fig. 1 may be used.

In some embodiments, Fig. 1, the modifying 100, 102 based on at least one of the first parameter P1 and the second parameter P2 comprises a modifying 100, 102 based on both the first parameter P1 and the second parameter P2.

The optional block 104 of Fig. 1 symbolizes using symbols as e.g. obtained by the mapping MAP-BIT-SYM, e.g. within resources RES as e.g. obtained by the mapping MAP-SYM-RES, for data transmission A1 (Fig. 2) and/or positioning in the wireless communications system 10.

In some embodiments, Fig. 1, the method comprises using 104a the symbols, as e.g. obtained by the mapping MAP-BIT-SYM, for providing positioning reference signals, PRS, for example for joint communication and sensing (e.g., determining a relative distance between a transmitter 12 (Fig. 2) and a receiver 12', 14), for example for joint communication and positioning (e.g., determining a position of at least one of a transmitter 12 and a receiver 12', 14'), wherein for example the symbols can be used for both communication and sensing, for example positioning. In other words, in some embodiments, at least some symbols may be used for the purpose of data communication, see the block arrow A1 of Fig. 2, and, e.g. simultaneously, for the further purpose of sensing, e.g. positioning. In some embodiments, a concept of positioning reference signals according to some accepted standard such as e.g. the concept of positioning reference signals (PRS) according to 5G Release 16 may at least temporarily be enhanced by using the principle according to the embodiments.

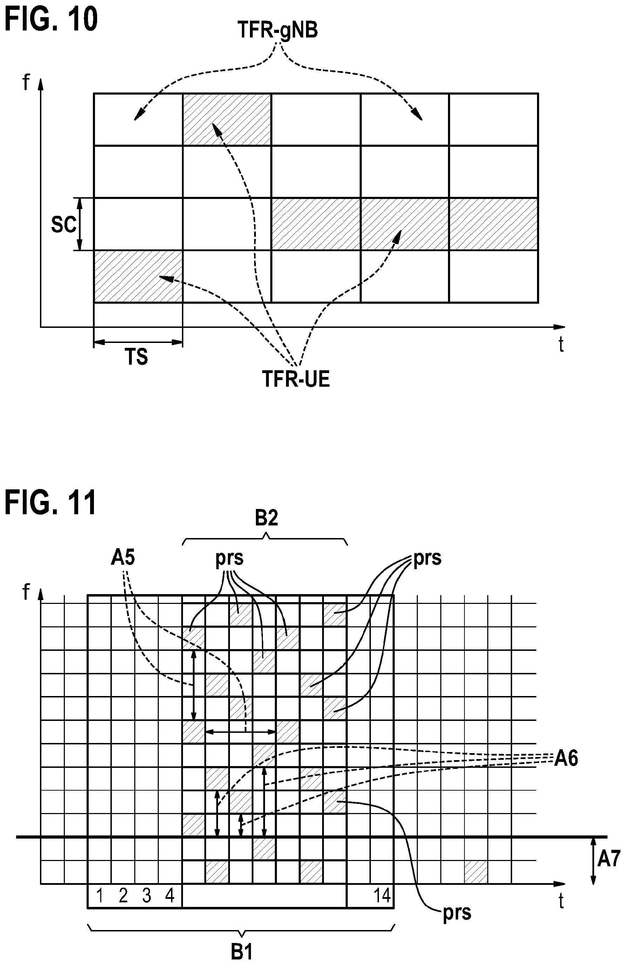

In some embodiments, Fig. 2, the resources RES of the wireless communications system 10 comprise at least time resources and frequency resources. In some embodiments, the time and frequency resources may e.g. be characterized by a time/frequency resource grid, examples of which are explained in detail further below with reference to e.g. Fig. 10.

In some embodiments, Fig. 2, the first parameter P1 characterizes at least one of: a) a bit error rate, b) a symbol error rate, e.g. as may be determined by a receiving device 12', 14, e.g. associated with a data transmission A1 from a transmitting device 12.

In some embodiments, Fig. 2, the second parameter P2 characterizes at least one of: a) correlation properties, b) autocorrelation properties, c) cross-correlation properties. In some embodiments, the correlation properties may determine a precision associated with positioning techniques, wherein e.g. at least a portion of a first signal sig1 may be correlated with a reflected portion sig1' of the first signal sig1, e.g. at a transmitting device 12 transmitting the first signal sig1 and receiving the reflected portion sig1' of the first signal sig1.

In some embodiments, Fig. 1, the method comprises considering 106 channel information CH-I of at least one radio channel associated with the wireless communications system 10 (Fig. 2) for a) the modifying 100 of the mapping MAP-BIT-SYM from bits associated with data to be transmitted over the wireless communications system 10 to symbols, and/or for b) the modifying 102 of the mapping MAP-SYP-RES of symbols to resources of the wireless communications system 10. In some embodiments, this enables to provide a more precise mapping, e.g. a bit-to-symbol mapping MAP-BIT-SYM and/or a symbol-to-resource MAP-SYM-RES mapping, also taking into consideration a state of a radio channel, e.g. between a transmitting device 12 using at least some symbols as obtained by the bit-to-symbol mapping and/or using at least some resources as obtained by the symbol-to-resource mapping, and a receiving device 12', 14 receiving a data transmission A1 from such transmitting device 12.

In some embodiments, the channel information CH-I of at least one radio channel may e.g. be obtained based on channel state information, CSI, reported by a device, e.g. as specified in some accepted standard.

In some embodiments, Fig. 1, the method comprises at least one of: a) modifying 100a, for example optimizing 100b, the mapping MAP-BIT-SYM from the bits associated with the data to be transmitted over the wireless communications system 10 to the symbols using at least one machine learning technique ML-TECH, b) modifying 102a, for example optimizing 102b, the mapping MAP-SYM-RES of the symbols to the resources RES of the wireless communications system 10 using at least one machine learning technique ML-TECH.

In some embodiments, same or similar or different machine learning techniques may be employed for the modifying 100a (and/or optimizing 100b) and for the modifying 102a (and/or optimizing 102b).

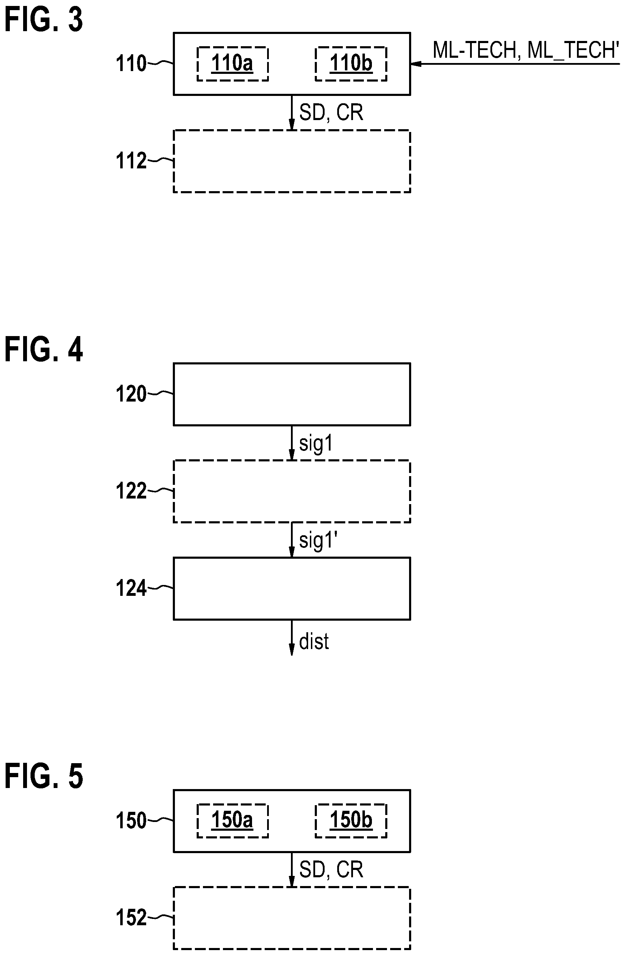

In some embodiments, Fig. 3, the method comprises modifying 110, for example optimizing 110a, at least one of: a) a sequence detector SD for detecting a sequence based on data received via the wireless communications system 10, for example based on the data transmission A1 over the wireless communications system 10, b) a correlation receiver CR for performing sensing, for example positioning. In some embodiments, this enables to improve signal processing on a receiver side. The optional block 112 of Fig. 3 symbolizes receiving data, e.g. via the wireless communications network 10, e.g. using the sequence detector SD and/or the correlation receiver CR as e.g. modified according to block 110.

In some embodiments, Fig. 3, the method comprises using 110b at least one machine learning technique ML-TECH, ML-TECH' for the modifying 110, for example optimizing 110a, of the sequence detector SD and/or of the correlation receiver CR, wherein for example at least one common machine learning technique ML-TECH is used for, for example jointly, performing a) at least one of the modifying 110, for example optimizing 110a, of the sequence detector SD and/or the correlation receiver CR (e.g., at a receiver side) and b) at least one of the modifying 100, 102 (Fig. 1) of the mapping MAP-BIT-SYM from bits associated with data to be transmitted over the wireless communications system 10 to symbols and the mapping MAP-SYM-RES of symbols to resources RES of the wireless communications system 10 (e.g., at a transmitter side).

In some embodiments, jointly performing the modifying 110, 100, 102, ... means performing the modifying a) based on at least partly the same input, and/or b) based on the respective other modifying steps, e.g. the modifying 110 depending on the modifying 100, 102, and/or vice versa.

In some embodiments, Fig. 4, the method comprises at least one of: a) transmitting 120 a first signal sig1, for example positioning reference signal, for example for joint communication and sensing, for example for joint communication and positioning, using at least some of the symbols, b) receiving 122 at least one reflected portion sig1' of the first signal sig1, c) determining 124, based at least on the first signal sig1 and the reflected portion sig1' of the first signal sig1 (e.g., based on a correlation of the first signal sig1 and the reflected portion sig1' of the first signal sig1), a distance dist between an object OBJ at which the least one reflected portion sig1' has been reflected and a device 12 that has transmitted the first signal sig1. In some embodiments, this enables sensing or ranging (e.g., determining a relative distance between a transmitter and another object, which may be, but is not required to be, a receiver), for example for joint communication and positioning (e.g., determining a position of at least one of a transmitter and a receiver). In some embodiments, the signal sig1 may also form part of the data transmission A1.

As already indicated above, in some embodiments, the object OBJ (Fig. 2) at which the least one reflected portion sig1' has been reflected may be a device for the wireless communications system 10, e.g. a receiver (or a, e.g. another, transmitter). In some embodiments, the object OBJ may be another device, e.g. not usable and/or provided for the wireless communications system 10, such as e.g. an obstacle, e.g. vehicle or robot or structure such as a building, which comprises reflective properties for the electromagnetic radiation characterizing the first signal sig1.

In some embodiments, at least some components 12, 12', 14, 200 for example all components, which are configured to use at least one machine learning technique ML-TECH, for example for at least one of the aforementioned aspects of modifying 100, 102, 110, for example optimizing, e.g., "trainable components", may be trained, for example independently, for example using a conventional training method for the at least one machine learning technique ML-TECH.

In some embodiments, however, it is also possible to design at least some of the trainable components, e.g. for a transmitter side and for a receiver side, jointly, e.g. to be configured for a joint modification, e.g. optimization, e.g. by joint training using at least one machine learning technique ML-TECH.

As an example, in some embodiments, an autoencoder approach can be employed. In some embodiments, an autoencoder is a trainable device where an input is encoded by an encoder stage into a latent space such that, e.g. after an external distortion, a decoder stage of the autoencoder is able to reproduce the input to the encoder stage at the output of the decoder stage.

In some embodiments, a training used for the at least one machine learning technique ML-TECH may be done based on, for example state-of-the-art, stochastic gradient descent techniques. In some embodiments, a possible neural network architecture e.g. usable for a transmitter side and/or a receiver side, is a multi-layer perceptron-type network or a feedforward neural network.

In some embodiments, the method comprises: training at least one trainable component, e.g. of an apparatus 200 performing at least some aspects according to the embodiments, whereby e.g. the modifying blocks 100, 102 (Fig. 1) can be improved, e.g. for optimizing at least one of the mappings MAP-BIT-SYM, MAP-SYM-RES.

Further exemplary embodiments, Fig. 5, relate to a method, for example a computer-implemented method, of processing data associated with at least one component of a wireless communications system 10 (Fig. 2), the method comprising: modifying 150, for example optimizing 150a, at least one of: a) a sequence detector SD for detecting a sequence based on data received via the wireless communications system 10, for example based on a data transmission A1 over the wireless communications system 10, b) a correlation receiver CR for performing sensing, for example positioning, wherein for example the method comprises: using 150b at least one machine learning technique for the modifying 150, for example optimizing 150a, of the sequence detector SD and/or of the correlation receiver CR, wherein for example at least one common machine learning technique is used for, for example jointly, performing a) at least one of the modifying 150, for example optimizing 150a, of the sequence detector SD and/or the correlation receiver CR and b) at least one of modifying 100 (Fig. 1) a mapping MAP-BIT-SYM from bits associated with data to be transmitted over the wireless communications system 10 to symbols and modifying 102 a mapping MAP-SYM-RES of symbols associated with the data to be transmitted over the wireless communications system 10 to resources RES of the wireless communications system 10. In other words, in some embodiments, aspects of some exemplary embodiments, e.g. according to Fig. 5, may be implemented on and/or for a receiver side, e.g. without providing for modifying, e.g. optimizing, one or more mapping aspects at a transmitter side, as e.g. explained above with respect to Fig. 1. In some embodiments, this receiver-side centric approach may improve joint communication and sensing, for example joint communication and positioning. The optional block 152 of Fig. 5 symbolizes receiving data, e.g. via the wireless communications network 10, e.g. using the sequence detector SD and/or the correlation receiver CR as e.g. modified according to block 150.

Further exemplary embodiments, Fig. 6, relate to a method, for example a computer-implemented method, of processing data associated with at least one component of a wireless communications system 10, the method comprising at least one of: a) transmitting 160 a first signal sig1 (also cf. Fig. 2), for example positioning reference signal, for example for joint communication and sensing, for example for joint communication and positioning, using at least some of the symbols (as e.g. mapped based on the mapping MAP-BIT-SYM explained above), b) receiving 162 at least one reflected portion sig1' of the first signal sig1, c) determining 164, based at least on the first signal sig1 and the reflected portion sig1' of the first signal sig1, a distance dist between an object OBJ (Fig. 2) at which the least one reflected portion sig1' has been reflected and a device 12 that has transmitted the first signal sig1. In other words, in some embodiments, aspects of some exemplary embodiments may be implemented, e.g. at a transmitter side 12, e.g. without providing for modifying, e.g. optimizing, one or more mapping aspects at a transmitter side. In some embodiments, this approach may at least sometimes e.g. improve sensing-related aspects.

Further exemplary embodiments, Fig. 7, relate to an apparatus 200, 200a, 200b configured to perform the method according to at least one of the preceding claims.

In some embodiments, the apparatus 200 may be configured to perform the method according to at least some of the claims 1 to 10.

In some embodiments, the apparatus 200a may be configured to perform the method according to at least claim 11.

In some embodiments, the apparatus 200b may be configured to perform the method according to at least claim 12.

In some embodiments, the apparatus 200 may be configured to perform the method according to at least some of the claims 1 to 10 and according to claim 11 and/or claim 12.

In some embodiments, the apparatus 200, 200a, 200b comprises at least one calculating unit, e.g. processor, 202 and at least one memory unit 204 associated with (i.e., usably by) said at least one calculating unit 202 for at least temporarily storing a computer program PRG and/or data DAT, wherein said computer program PRG is e.g. configured to at least temporarily control an operation of the apparatus 200, 200a, 200b, e.g. the execution of a method according to the embodiments.

In some embodiments, the at least one calculating unit 202 comprises at least one core (not shown) for executing said computer program PRG or at least parts thereof, e.g. for executing the method according to the embodiments or at least one or more steps thereof.

According to further preferred embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU) or hardware accelerator, e.g. for performing machine-learning related processes such as training and/or inference. According to further preferred embodiments, any combination of two or more of these elements is also possible to be used for the at least one calculating unit 202. According to further preferred embodiments, the memory unit 204 comprises at least one of the following elements: a volatile memory 204a, particularly a random-access memory (RAM), a non-volatile memory 204b, particularly a Flash-EEPROM.

In some embodiments, said computer program PRG is at least temporarily stored in said non-volatile memory 204b. Data DAT (e.g. associated with the modifying 100, 102, ... and/or optimizing of the mappings MAP-BIT-SYM, MAP-SYM-RES), which may e.g. be used for executing the method according to the embodiments, may at least temporarily be stored in said RAM 204a.

In some embodiments, an optional computer-readable storage medium SM comprising instructions, e.g. in the form of a computer program PRG, may be provided, wherein said computer program PRG, when executed by a computer, i.e. by the calculating unit 202, may cause the computer 202 to carry out the method according to the embodiments. As an example, said storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some embodiments, the apparatus 200, 200a, 200b may comprise an optional data interface 206, e.g. for bidirectional data exchange with an external device (not shown). As an example, by means of said data interface 206, a data carrier signal DCS may be received, e.g. from said external device, for example via a wired or a wireless data transmission medium, e.g. over a (virtual) private computer network and/or a public computer network such as e.g. the Internet.

In some embodiments, the data carrier signal DCS may represent or carry the computer program PRG according to the embodiments, or at least a part thereof.

Further exemplary embodiments relate to a terminal device 12, 12', e.g. user equipment, for a wireless communication system 10, comprising at least one apparatus 200, 200a, 200b according to the embodiments.

Further exemplary embodiments relate to a network device 14, e.g. gNB, for a wireless communication system 10, comprising at least one apparatus 200, 200a, 200b according to the embodiments.

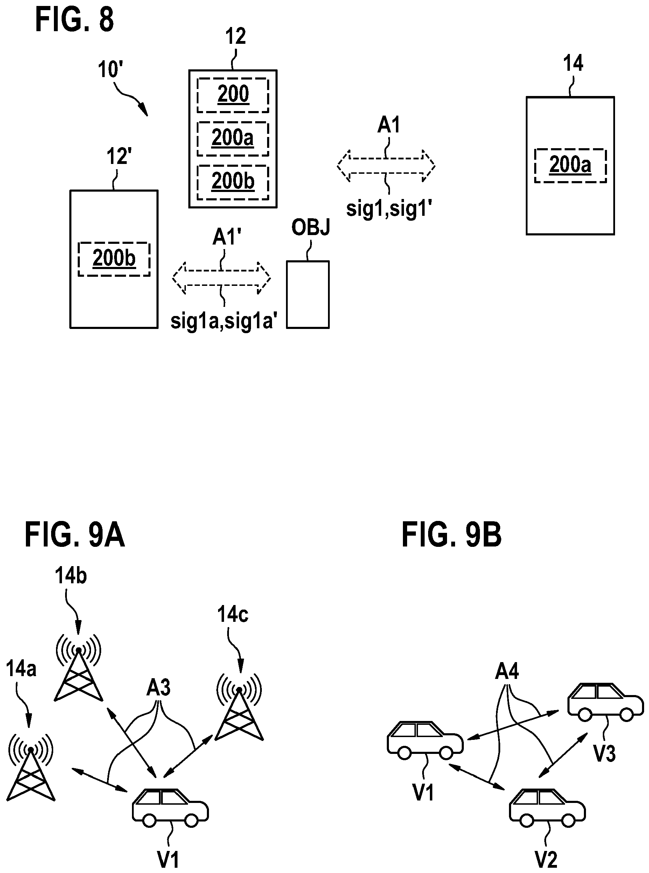

Further exemplary embodiments, Fig. 2, 8, relate to a wireless communication system 10, 10' comprising at least one apparatus 200, 200a, 200b according to the embodiments.

In some embodiments, Fig. 8, the terminal device 12 comprises at least one apparatus 200, 200a, 200b, the gNB comprises an apparatus 200a, and the further terminal device 12' comprises an apparatus 200b.

While terminal device 12 of Fig. 8 may e.g. perform any of the aforementioned methods according to the embodiments, terminal device 12' may e.g. be configured to perform a method according to Fig. 6, e.g. transmitting a signal sig1a, receiving a reflected portion sig1a', and determining a distance between the object OBJ and the terminal device 12'. Block arrow A1' collectively symbolizes the signals sig1a, sig1a'.

In the following, further exemplary aspects and embodiments are disclosed which, in further exemplary embodiments, can e.g. be combined with one or more of the exemplary aspects and/or embodiments explained above.

In some embodiments, one or more aspects of the principle according to the embodiments may e.g. be applied to 5th generation (5G) new radio (NR) communication. In some embodiments, a wireless communications network 10, 10' (Fig. 2, 8) may e.g. comprise at least a next generation node base-station (gNB) 14 and a set of terminal devices, e.g. user equipment (UE), 12, 12'. In some embodiments the gNB 14 is used for controlling or communicating data to some or all associated UEs 12, 12', e.g. via a Uu interface. In some embodiments, the Uu interface may represent a communication link between a gNB 14 and another network terminal device 12, 12'. In some embodiments, the terminal device 12, 12' may be an loT device, an infrastructure (e.g., traffic lights, street lights, etc.), an industrial automation component or infrastructure (e.g., robots, machines, etc.), a mobile broadband user, and/or a vehicle, as already mentioned above. In some embodiments, using terminal devices 12, 12', e.g. single vehicles may communicate to the gNB 14 or multiple vehicles may comprise a group where one or more vehicles are communicating to the gNB 14, as well as to themselves. In some embodiments, when terminal devices 12, 12' are communicating to themselves, i.e. with other terminal devices, a direct communication interface may be used, e.g. a PC5 interface according to some accepted standard.

In some embodiments, the principle according to the embodiments may be used for one or more of the following, exemplary use cases, which may e.g. benefit from finding a, for example accurate, and for example real-time, location of devices, e.g. nodes, in the wireless communication network 10, 10':
a) Location-based services, such as accurate positioning for shared bikes and location-based advertising,
b) Industry-related use cases, such as waste management and collection,
c) eHealth-related use cases, such as medical equipment location in hospitals and patient location outside of hospitals,
d) Emergency-related and mission-critical-related use cases,
e) Road-related use cases, such as road-user charging,
f) Rail- and maritime-related use cases, such as asset and freight tracking,
g) Aerial-related use cases, such as unmanned aerial vehicle missions and operations.

While in some conventional systems, positioning is only supported for classical cellular scenarios, i.e., involving static base stations providing radio coverage for the cells and UE attached to the cells, in some embodiments, especially in vehicular and/or industrial applications, the principle of the embodiments may be used, e.g. to enhance capabilities of a sidelink (e.g., PC5), e.g. to support inter-terminal device, e.g. inter-UE, positioning, e.g. over the sidelink.

As an example, Fig. 9A schematically depicts an operational scenario where the principle according to the embodiments may be used for positioning, e.g. determining a position of the vehicle v1, e.g. based on data transmissions A3, e.g. over a Uu interface, with one or more gNBs 14a, 14b, 14c. In this exemplary scenario, the principle according to the embodiments (c.f. e.g. the exemplary aspects explained above with reference to Fig. 1) may be used, e.g. for any device which is at least temporarily assuming a role of a transmitting device, i.e. presently both the gNBs 14a, 14b, 14c and a terminal device (not shown) associated with the vehicle v1.

As a further example, Fig. 9B schematically depicts an operational scenario where the principle according to the embodiments may be used for positioning, e.g. determining a position of vehicles v1, v2, v3, e.g. based on data transmissions A4, e.g. over sidelink(s), e.g. using a PC5 interface. In this exemplary scenario, the principle according to the embodiments (c.f. e.g. the exemplary aspects explained above with reference to Fig. 1) may be used, e.g. for any device which is at least temporarily assuming a role of a transmitting device, i.e. presently one or more terminal devices (not shown) associated with at least one of the vehicles v1, v2, v3.

Fig. 10 schematically depicts time/frequency resources according to exemplary embodiments, wherein the horizontal axis t characterizes time, and wherein the vertical axis f characterizes frequency. As an example, reference sign TS symbolizes a time slot, and reference sign SC symbolizes a frequency resource block, e.g. sub-channel, as may be used in at least some embodiments.

In some embodiments, resources in the time dimension t may comprise at least one of time slot(s), subframe number(s), time symbol index/indices, and/or other synchronization parameter(s). In some embodiments, for frequency resources, see axis f of Fig. 10, a gNB 14 (Fig. 2, 8) may e.g. indicate frequency resources to be allocated either contiguously or non-contiguously.

As an example, in some embodiments, the reference sign TFR-gNB symbolizes gNB-controlled time/frequency resources indicated and/or configured by the gNB, whereas the dashed regions collectively denoted with reference sign TFR-UE symbolize time/frequency resources e.g. autonomously allocated by at least one terminal device 12, 12'.

In some embodiments, a terminal device 12 (Fig. 2, 8) can e.g. be configured with one or more downlink positioning reference signal, PRS, positioning frequency layer configurations. In some embodiments, a PRS positioning frequency layer is defined as a collection of PRS resource sets with each PRS resource set defining a collection of PRS resources.

In some embodiments, to find the position of a node, e.g. terminal device 12, downlink reference signals may be used at the terminal device (e.g., UE) side.

In some embodiments, existing downlink reference signals of the communications system 10, 10', like a channel state information reference signal and the synchronization signals, are not used for a position estimation, as these reference signals at least in some configurations may have weak correlation properties, e.g. due to low resource element (RE) density, and their RE pattern might e.g. not spread across a plurality, e.g. all, of the subcarriers in the frequency-domain.

In some embodiments, to overcome at least some of these limitations, other reference signals such as e.g. positioning reference signals may be used, which may have a comparatively high RE density and correlation properties better than e.g. other, conventional reference signals, e.g. based on a diagonal or staggered PRS RE pattern.

In some embodiments, PRS e.g. based on or at least similar to PRS as defined by Release 16 of the 3GPP 5G specification, may be used.

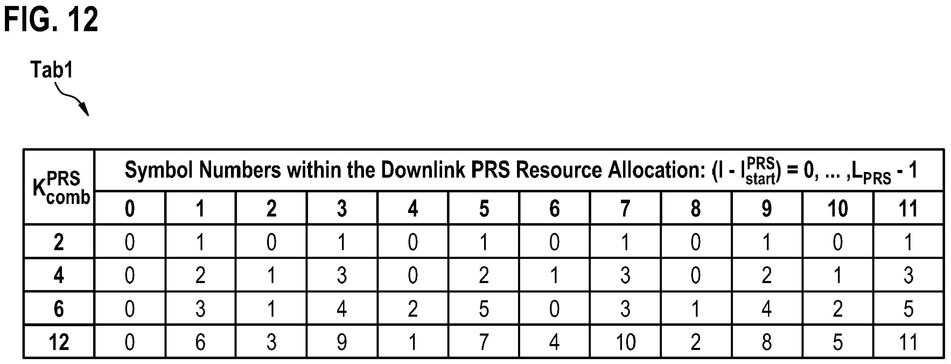

In some embodiments, the patterns proposed for the PRS according to Release 16 of 5G are called "combs" and describe by the distance between two PRS RE and its offset over time. This is exemplarily depicted in Figure 11 where some, but not all, of the positioning reference signals are exemplarily indicated by the reference sign prs. Bracket B1 symbolizes 14 OFDM symbols, and bracket B2 symbolizes a number of OFDM symbols used for providing positioning reference signals prs. The double arrows A5 symbolize an exemplary comb number, and the double arrows A6 symbolize a first offset in the frequency dimension relative to a second offset A7, which may e.g. be defined in some accepted standard such as e.g. 3GPP TS 38.211, e.g. Table 7.4.1.7.3-1, also see the Table Tab1 exemplarily depicted by Fig. 12.

In some embodiments, the use of the PRS patterns as exemplarily depicted by Fig. 11 can result in an improved positioning accuracy, this approach cannot be mapped directly to a sidelink positioning (SL positioning) problem.

In view of this, the principle according to the embodiments can e.g. be employed to further improve positioning accuracy in sidelink scenarios as e.g. depicted by Fig. 9A.

As already mentioned above, the principle according to the embodiments can e.g. be used for cases where the communication and the positioning are not explicitly separated in time and frequency. In some embodiments, this may be referred to as joint communication and sensing or joint communication and ranging or joint communication and positioning.

In some embodiments at least one of the following, e.g. technology-wise different, positioning methods or techniques may be employed: For example, time of Flight (ToF), time-difference of arrival (TDoA), angle-of-arrival (AoA), angle-of-departure (AoD) measurements, etc..

In some embodiments, absolute positioning may be provided using multiple anchors (e.g., reference points with known positions, e.g. in a three-dimensional space), e.g. to determine (x,y,z) coordinates.

Thus, in some embodiments, ranging, i.e., finding, for example only, a distance/range per path/link (e.g., between terminal device 12 (Fig. 2) and gNB 14) may be a starting point, e.g. for a precise positioning.

In some embodiments, a distance dist (or a range) between two devices 12, 14 can e.g. be determined based on Time of Flight (ToF) measurements. For this, in some embodiments, a, for example known, reference signal, see for example the first signal sig1 of Fig. 2, may be correlated with a received signal sig1', e.g. to find a time lag (which may e.g. be represented in a correlation peak of the correlation). Hence, some embodiments propose to provide the first signal sig1 or reference signal with comparatively good autocorrelation properties, which facilitates to detect e.g. the time lapse of flight, e.g., ToF.

In some embodiments, the following problem ("Problem 1") can at least temporarily and/or at least partially be mitigated or solved.

Problem 1: Joint Communication and detection of reference signals such as e.g. PRS, e.g. PRS for sidelink communication, e.g. at a receiving device 12' (Fig. 2).

In some conventional approaches, specific sets of resources may be explicitly reserved, e.g. to transmit known sets of reference signals, which are e.g. designed for a particular focus, e.g., to determine a position of a terminal device 12 with respect to a gNB 14 or another terminal device 12'. In these conventional approaches, if the specific (sets of) resources are blocked for, e.g., for positioning, no communication, e.g. data communication A1 (Fig. 2), can be performed on the same set of resources used for reference signals.

In some conventional approaches, a selection of the respective resources, e.g. in the time/frequency resource grid is standardized, e.g. static.

By contrast, in some embodiments, a selection of respective resources, e.g. in the time/frequency resource grid, e.g. for reference signals such as e.g. PRS, is not static, but may e.g. be modified, see for example block 102 of Fig. 1 and the modified mapping MAP-SYM-RES. This way, actual channel conditions of a radio channel may be accounted for, wherein e.g. optimum locations within the time/frequency resource grid, e.g. to place reference symbols, e.g. PRS, may be selected.

In some embodiments, relating to joint communication and sensing, it is proposed to provide or use a waveform or signal, such that during communication, other tasks can be conducted simultaneously, e.g., positioning measurements. Thus, in these exemplary embodiments, data communication A1 (Fig. 2) and sensing or positioning are not separated over time and frequency (and/or space) in a strict manner (as e.g. provided by TDMA/FDMA/SDMA schemes).

In some embodiments, encoded sequences, e.g. sequences of encoded data bits to be transmitted via the wireless communication network 10, 10', may be selected, e.g. in a sub-space, e.g. together with at least one positioning vector. In some embodiments, it is proposed to provide an encoded signal that has e.g. k many information bits, m many possible bits characterising a positioning symbol space, and for example N many final encoded bits. In some embodiments, the k many information bits may results in N many encoded bits, wherein the final N many bits may e.g. be mapped to a sequence (bits-to-sequence mapping MAP-BIT-SEQ, see for example Fig. 1) set, which may e.g. be trained, e.g. to increase its correlation property for positioning and which may also be trained, e.g. to minimize a cross-entropy loss, e.g. for good sequence recovery at a receiver side.

In some embodiments, the following problem ("Problem 2") can at least temporarily and/or at least partially be mitigated or solved.

Problem 2: Communication with receiver 12' (Fig. 2) and detection of reflected signal, sig1', which may e.g. be a sidelink PRS, S-PRS. This object can e.g. be addressed by a method according to exemplary embodiments already explained above with reference to Fig. 4, 6. In some embodiments, determining 124 the distance may e.g. be done based on round-trip time-of-flight (ToF) measurements, i.e., an emitted signal sig1 is reflected back via a, for example target, object OBJ, wherein the reflected signal sig1' is e.g. detected at the transmitter of the emitted signal sig1. In some embodiments, a precision of the determination 124 of the distance based on such ToF principle may be increased if communication waveforms are used, which e.g. have good autocorrelation properties.

Some embodiments enable to provide a trainable device, e.g. in the form of the apparatus 200, 200a, 200b, that is e.g. configured to learn and/or produce a signal sig1 or waveform capable of performing integrated or joint communication and sensing. In some embodiments, using the abovementioned machine learning technique(s) ML-TECH enable to train the apparatus 200, 200a, 200b, e.g. regarding an optimization of at least one mapping MAP-BIT-SYM, MAP-SYM-RES, which may contribute to determining and/or learning and/or producing a signal sig1 or waveform capable of performing integrated or joint communication and sensing.

In some embodiments, the apparatus 200, 200a, 200b is configured to find a mapping MAP-BIT-SYM from information bits onto complex constellation points, wherein the objective is to minimize a BER (bit error rate) / SER (symbol error rate), e.g. for the first parameter P1 (Fig. 2) and to increase the correlation properties, e.g. for the second parameter P2.

In some embodiments, the apparatus 200, 200a, 200b is configured to learn to optimize the reference symbols, e.g. PRS, itself, e.g. by modifying 100 (Fig. 1), e.g. optimizing 100a, the mapping MAP-BIT-SYM, such they can carry information, e.g. for a data transmission A1, and that they are still suited for, e.g., positioning.

In some embodiments, the apparatus 200, 200a, 200b is configured to learn a placement of symbols, e.g. reference symbols, e.g. PRS, e.g. in a time/frequency resource grid (see for example Fig. 11), e.g. to achieve, for example excellent, sensing and communication performance, e.g. by modifying 102 (Fig. 1), e.g. optimizing 102a, the mapping MAP-SYM-RES.

In some embodiments, the apparatus 200, 200a, 200b is configured to learn and/or detect, e.g. for a receiver side, to be able to recover symbols, e.g. PRS or S-PRS as provided according to some embodiments, e.g. with high reliability (e.g., low BER/SER), e.g. such that it □ can learn a waveform capable of performing integrated or joint communication and sensing, and/or □ is able to detect the, for example entire, reference signal and to feed the detected reference signal into another (e.g., trainable) device e.g. configured to perform a position technique POS-TECH (Fig. 2) based thereon, e.g. determining a the time-of-flight for ranging. In some embodiments, the aforementioned learning and/or detecting can e.g. be implemented using the exemplary embodiments explained above with reference to Fig. 3, 5.

In some embodiments, the apparatus 200, 200a, 200b is configured, e.g. as a trainable device, e.g. capable of performing at least one machine learning technique, e.g. perform detection of at least one communication signal and to perform ranging (e.g., based on sensing of electromagnetic variations in the signal, e.g. by evaluating the variations using a correlation procedure), e.g. at two distinct locations (e.g., at a first location, e.g. associated with a communication receiver, and at a second location, e.g. associated with a receiver receiving a reflected portion of a transmitted signal, e.g. for positioning).

In some embodiments, the following exemplary relations or aspects E1, E2, E3, E4 between different exemplary embodiments may be envisaged:
E1: In some embodiments, a trainable device or apparatus 200, 200a, 200b is provided, e.g. for a transmitting device 12, which trainable device 200, 200a, 200b is used to conduct a transmitting sequence mapped and trained from an input set of information bits, wherein information bits are, e.g. bit-wise, transformed, e.g. based on learning of parameters, e.g. to a random or pseudo-random sequence. In some embodiments, the transmitter may also, e.g. based on a cost function, e.g. based on the second parameter P2, optimize an allocation on a time-frequency grid, e.g. using the mapping MAP-SYM-RES.

E2: In some embodiments, a trainable device or apparatus 200, 200a, 200b, e.g. for a receiver device, is provided and may e.g. be used to detect a sequence and to learn a position of the detected sequence in the time/frequency grid. In some embodiments, the trainable device 200, 200a, 200b is configured to learns correlation vectors associated with the detected sequence, and/or to decode mapped information bits of the detected sequence.

E3 (e.g. related to integrated or joint positioning and communication): in some embodiments, a communication is e.g. done between transmitter 12 (Fig. 2) and receiver 12', wherein a received trainable sequence of symbols at the receiver 12' can be decoded (e.g., in the sense of communication bits), and positioning-related parameters can be measured (using, e.g., ToF, TDoA, AoA/D) effectively at the receiver 12'.

E4 (e.g. integrated ranging and communication): in some embodiments, communication is done between terminal device 12 (Fig. 2) and receiver devices 12', 14, where a portion sig1' of an electromagnetic signal sig1 associated with the communication A1 is reflected back to the terminal device 12, e.g. to a receiver of the terminal device 12, wherein the reflected portion sig1' can be sensed and, based on the sensed portion sig1', positioning measurements can be conducted at the terminal device 12.

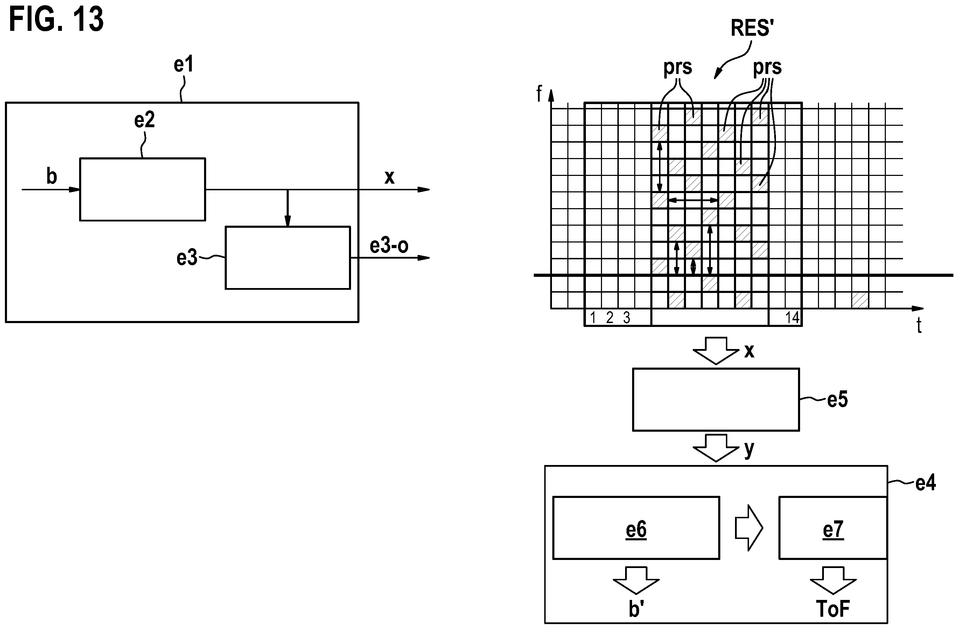

Fig. 13 schematically depicts a simplified block diagram according to exemplary embodiments. Element e1 symbolizes an apparatus, e.g. a trainable apparatus, e.g. for a transmitting device or transmitter, e.g. for at least one of the components 12, 12', 14 of the wireless communications network 10 (Fig. 2, 8). Element e2 symbolizes a bit-to-symbol mapper that is configured to map a sequence b of incoming data bits to respective symbols, e.g. according to a modulation (and/or coding) scheme, MCS. Element e3 symbolizes a symbol-to-grid mapper configured to map the symbols x to resources RES (Fig. 2), e.g. characterized by one or more resource elements, e.g. of a time/frequency grid of the wireless communication system 10, 10'. In some embodiments, an output e3-o can characterize a grid mask, e.g. PRS grid mask, characterizing the resources determined by the mapper e3. Element RES' symbolizes exemplary resources determined by the mapper e3, wherein some resources elements to be used for PRS are exemplarily denoted with reference sign prs. In some embodiments, the apparatus e1 of Fig. 13 may e.g. be implemented using the apparatus 200, 200a, 200b of Fig. 7. In some embodiments, the apparatus e1 may be trained by using at least one machine learning technique ML-TECH, e.g. for modifying, e.g. optimizing at least one mapping MAP-BIT-SYM, MAP-SYM-RES as explained above with respect e.g. to Fig. 1.

In some embodiments, Fig. 13, a further apparatus e4, e.g. a trainable receiver, may be provided which is configured to receive signals y via at least one channel e5 of the wireless communication system 10, 10'. In some embodiments, the signals may depend on the transmitted symbols x, wherein the received signals y may e.g. be affected by noise and/or other sources of interference. Element e6 symbolizes a sequence detector for detecting at least one sequence b' based on the received symbols y. Element e7 symbolizes a correlation receiver configured to determine, e.g. based on the detected sequence b', a ToF value e.g. characterizing a relative distance between the apparatus e1 and the apparatus e4.

In some embodiments, the apparatus e4 of Fig. 13 may e.g. be implemented using the apparatus 200, 200a, 200b of Fig. 7. In some embodiments, the apparatus e4 may be trained by using at least one machine learning technique ML-TECH, ML-TECH', e.g. according to block 110 of Fig. 3 and/or block 150 of Fig. 5.

In some embodiments, an individual training of the apparatus e1 and/or of the apparatus e4 is proposed. In some other embodiments, a joint or common training of both apparatus e1, e4 is proposed.

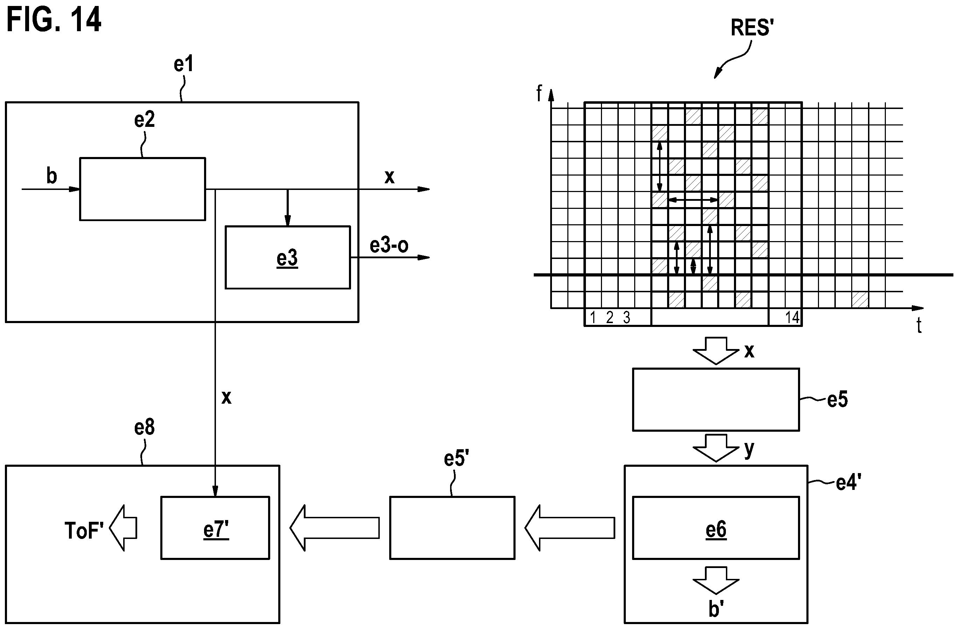

Fig. 14 schematically depicts a simplified block diagram according to further exemplary embodiments. The elements e1, e2, e3, e5, e6 b, x, e3-o, x, y of Fig. 14 are identical to the corresponding elements e1, e2, e3, e5, e6, b, x, e3-o, x, y of Fig. 13. Element e4' symbolizes an apparatus, e.g. trainable receiver comprising the sequence detector e6. In addition to Fig. 13, a reflection channel e5' is indicated, symbolizing a reflected portion, e.g. similar to portion sig1' of Fig. 2, of a signal associated with the symbols x transmitted via the channel e5 to the apparatus e4', and reflected by the apparatus e4'. Element e8 symbolizes a further apparatus e8, e.g. receiver, configured to receive the reflected portion via the reflection channel e5', and comprising a correlation receiver e7', i.e. similar to element e7 of Fig. 13. The correlation receiver e7' determines a ToF value ToF' based on the received reflected signal portion and the known symbols x. On this basis, in some embodiments, the elements e7', e8 do not require training, as the transmitted symbols x are already known, see the arrow from element e2 to element e7'.

In some embodiments, the apparatus e8, for example its correlation receiver e7', may be trained, e.g. similar to the correlation receiver CR mentioned above e.g. with respect to Fig. 3, e.g. to improve its detection capabilities. In some embodiments, the apparatus e8, for example its correlation receiver e7', may be trained individually, e.g. independent of any other component of the exemplary configuration of Fig. 14. In other embodiments, the apparatus e8, for example its correlation receiver e7', may be trained jointly, i.e. together and/or depending on a training of at least one further component of the exemplary configuration of Fig. 14.

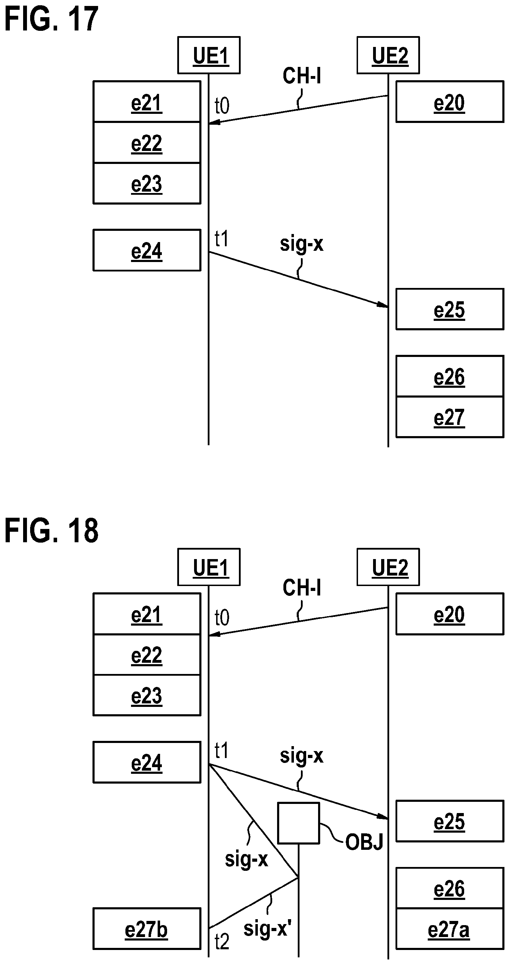

In some embodiments, e.g. with the configuration of Fig. 13, the apparatus e1, e.g. provided at a first terminal device 12 (Fig. 2), transmits a trainable signal, e.g. to another apparatus e4, e.g. provided at another terminal device 12', wherein the trainable receiver e4 can e.g. detect a corresponding sequence b'. In some embodiments, the apparatus e4 may e.g. learn a corresponding sequence via, e.g., a sequence estimation, and may then, for example, decode the information (mapping it to, e.g., bit) and may e.g. measure one or more positioning (e.g., ranging) parameters, e.g., ToF, AoA/D, etc.. An exemplary signaling sequence is explained further below with reference to Fig. 17.

In the following, exemplary aspects and embodiments related to an optimization of a bit-to-(reference-)symbol mapping MAP-BIT-SYM are explained.

In some embodiments, a trainable apparatus 200 or device is proposed, which is configured to assign bits to a complex constellation alphabet. In some embodiments, the trainable apparatus 200 is configured to learn, e.g. via training, e.g. using at least one machine learning technique ML-TECH, e.g. using training data, e.g. to find an optimum set of magnitude and angles of the complex numbers characterizing the constellation alphabet.

In some embodiments, by optimization of the symbol positions, i.e., the constellation points, the apparatus can assign positions in the complex plane characterizing the symbols to which the bits are assigned, e.g. such that two cost functions are achieved: 1. a receiver can reliably detect the symbols, e.g., to optimize SNR or minimize at least one of BER, SER, MSE (mean square error), 2. at the same time, high autocorrelation properties may be preserved, e.g. such that a good positioning accuracy is achieved. In some embodiments, additionally, a comparatively low cross correlation with other possible trainable sequences that may e.g. arise from a same generator procedure (e.g., polynomial or matrix), can be attained.

In the following, exemplary aspects and embodiments related to an optimization of the (reference) symbols in the time/frequency resource grid are explained.

In some embodiments, learning of an entire grid range (e.g., a block wise approach, e.g. resource block wise approach) is proposed.

In some embodiments, e.g. based on additional information (e.g., channel information CH-I, such as e.g. channel state information, CSI), a location of the resource elements carrying the (positioning) reference symbols within the resource grid may be optimized, e.g. to maximize a cost value, e.g., maximize SNR, minimize errors, etc. Hence, in some embodiments, locations in the grid may e.g. be selected without a regularity or a mapping, which may be in contrast to some accepted standards.

In some embodiments, however, a trainable regularity of the location of the resource elements carrying the (positioning) reference symbols can evolve, e.g. during a training process.

In some embodiments, a specified training process may lead to similar regularity of the location of the resource elements carrying the (positioning) reference symbols in the network, e.g. regarding a plurality of devices (e.g., UE).

In some embodiments, a regularity of the location of the resource elements carrying the (positioning) reference symbols can be controlled with another cost metric, e.g., minimizing SINR (signal to interference and noise ratio), etc.

In some embodiments, learning parameters of the grid (e.g., a parametric approach) is proposed. In some embodiments, a trainable apparatus 200 might e.g. be restricted, e.g. to optimize only a defined inter-resource-element spacing and/or a temporal and/or spectral offset. In some embodiments, a strict specified training process may lead to an optimum inter-resource-element spacing, a temporal or spectral offset, etc., e.g. being controlled with a cost metric, e.g., minimizing SINR, etc.

In the following, exemplary aspects and embodiments related to an optimization of the reference symbol sequence in combination with a respective sequence detector at a receiver side are explained.

In some embodiments, leveraging known constellation symbols is proposed. In some embodiments, e.g. related to a trainable sequence mapper, a trainable apparatus 200 may be provided which is configured to output a sequence of symbols where the information bits are, e.g. somehow, distributed over a sequence vector, and e.g. not in a one-to-one mapping from information bits onto reference symbols (non-systematic mapping). In some embodiments, the mapping is based on the previously explained cost(s) and assumptions.

In some embodiments, related to aspects of a channel code, information bits may be assigned to a particular code word out of a codebook. In some embodiments, possible coding schemes are, for example, LDPC (low-density parity check) codes, Polar codes, BCH (Bose-Chaudhuri-Hocquenghem) codes, Reed-Muller codes or convolutional codes, or other block codes.

In some embodiments, a mapping MAP-BIT-SYM can either be a systematic mapping, i.e., the information bits are an implicit part of the code word, or a non-systematic mapping, i.e., the information bits may not be recovered directly from the an associated random sequence, or pseudo random sequence where, for example, autocorrelation is high (e.g., for positioning techniques) and cross correlation with other generated vectors is low.

In some embodiments, leveraging an optimized constellation is proposed, e.g. using modified, e.g. optimized symbols, e.g. instead of known, conventional symbols.

In the following, exemplary aspects and embodiments related to a a determination, e.g. computation, of relative positioning and information recovery are explained.

In some embodiments, a determination, e.g. computation, of a position can e.g. be done at two locations: 1. Receiver-side positioning, 2. Transmitter-side positioning (e.g., reflection based).

In some embodiments, related to receiver-side positioning, two tasks may be performed by an apparatus 200, 200a, 200b associated with the receiver, e.g. a receiving terminal device 12' (Fig. 2), e.g. if joint communication and sensing, e.g. based on PRS is considered. In some embodiments, sensing and communication (e.g., receiving) may be done based on the same time and frequency resources, e.g. the time and frequency resources associated with the PRS. In some embodiments, the receiver may a) detect the reference symbols, e.g. PRS, b) recover information bits (e.g. being associated with transmitted user data), c) perform reference signal detection and positioning.

In some embodiments, e.g. for detecting the reference symbols, the receiver (or its associated apparatus 200, 200a, 200b) determines the utilized positioning reference sequence, e.g. by performing at least one of: sequence identification, independent symbol detection, channel decoding.

In some embodiments, recovering of information bits can be performed based on the identified symbols. In some embodiments, a success rate of this procedure may determine a symbol error rate (SER) and, thus, a parameter characterizing a reliability of the communication.

In some embodiments, regarding reference signal detection and positioning, compared to conventional approaches, the positioning reference signal may not be known to the receiver. I.e., in some embodiments, an output of sequence detector may be used as a detected positioning reference signal. In some embodiments, this detected positioning reference signal may be transformed into the time domain, and a subsequent correlation between the detected reference signal and the actual received signal (as transformed to the time domain) enables to determine a time-lag and thus the time-of-flight, ToF.

In some embodiments, related to transmitter-side positioning (e.g., reflection-based), as the transmitted signal (see for example the first signal sig1 of Fig. 2) is known to the transmitter, in some embodiments, sensing and communication may be separated.

In some embodiments, a detection of the reference symbols may e.g. be performed as explained above, wherein the receiver (see for example element e4' of Fig. 14) e.g. determines a utilized positioning reference sequence. I.e., in some embodiments, at least one of sequence identification, independent symbol detection, and channel decoding may be be performed.

In some embodiments, a detection of the reflected signal portion sig1' (Fig. 2) may be performed as follows. As a (for example already trained) positioning reference signal is, for example entirely, known to the transmitter e1 (Fig. 14), the transmitter, or its associated receiver e8, respectively, may look for a reflection of the transmitted signal, e.g. associated with a specific resource range, e.g. resource block, as e.g. used for the transmitted PRS. In some embodiments, this can be done utilizing a correlation receiver e7' configured to determine an overall time lag (caused by a signal travel over a signal path from the transmitter e1 over the channel e5 to the receiver e4' and over a reflective path associated with the reflection channel e5' to the receiver e8.

In some embodiments, a parametric approach may be employed, wherein, for example, an overall procedure may be simplified, as e.g. only parameters of the resource grid RES' (Fig. 14) in which the reference signals, e.g. PRS, are placed may be optimized, but, for example, not an entire resource block itself is the positioning reference signal.

In the following, further aspects and examples of a Training process according to further exemplary embodiments are explained.

In some embodiments, it is proposed to first define a, for example proper, reference-symbol sequence, and to perform a mapping of sequence bits onto symbols afterwards.

In some embodiments, channel information CH-I, e.g. channel state information, may be used for training at least one trainable component, e.g. of the apparatus 200, 200a, 200b, e.g. for use at a transmitter side, the channel information e.g. comprising interference measurements, SNR, SINR, etc.

In some embodiments, a generator function may be used to produce a, for example finite, set of pseudo-random or random sequences. In some embodiments, the generation process may e.g. be trained, e.g. learned, e.g. at a receiver side, e.g. with some initial assumption and/or using a priori knowledge.

In some embodiments, a generator function may e.g. produce at least one random sequence, e.g. based on reinforcement learning, where a pseudo-random part is provided, and wherein it is waited for a feedback. In some embodiments, a pseudo-random addition and/or the cost function may e.g. be known the receiver.

In some embodiments, a time-frequency mapping MAP-SYM-RES may e.g. follow a training-based approach, where one or more input parameters are specified, e.g., congestion of the network, e.g. the wireless communication system 10, 10', SINR, etc. In some embodiments, it may be assumed that a receiver may recover, e.g. based on a priori information, as e.g. used in a transmitter as well, e.g., SINR measurements.

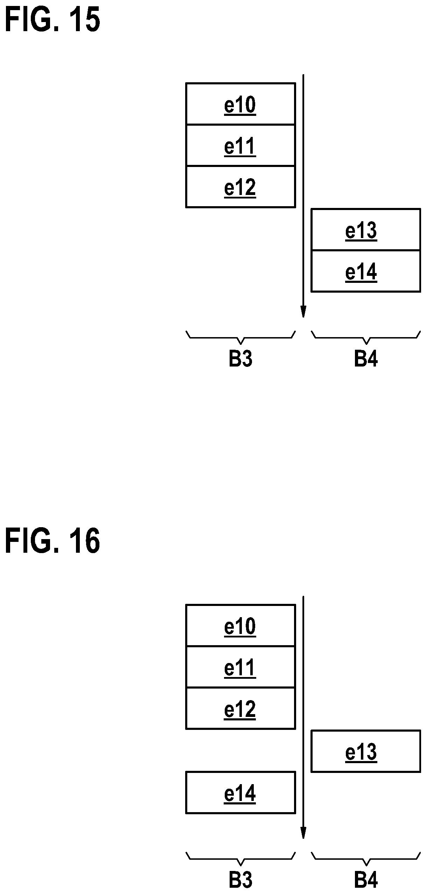

Fig. 15 schematically depicts a simplified block diagram of a configuration for using principles of the embodiments according to further exemplary embodiments, wherein bracket B3 symbolizes a transmitter side and bracket B4 symbolizes a receiver side. Element e10 symbolizes a bit sequence e.g. characterizing data bits to be transmitted, see for example arrow A1 of Fig. 1. Element e11 symbolizes a, for example trainable, symbol generation, e.g. using a bit-to-symbol mapping MAP-BIT-SYM, which, in some embodiments, may e.g. be modified, e.g. optimized (see for example blocks 100, 100a of Fig. 1), e.g. using at least one trainable machine learning technique ML-TECH. Element e12 symbolizes a, for example trainable, grid assignment, e.g. using a symbol-to-resource mapping MAP-SYM-RES, which, in some embodiments, may e.g. be modified, e.g. optimized (see for example blocks 102, 102a of Fig. 1), e.g. using at least one trainable machine learning technique ML-TECH. Note that in some embodiments, for the blocks 100, 100a, 100b and for the blocks 102, 102a, 102b, identical or similar or different machine learning techniques ML-TECH and/or training methods for the identical or similar or different machine learning techniques ML-TECH may be used. Element e13 symbolizes a, for example trainable, sequence detection for detecting, on the receiver side B4, sequence(s) as e.g. obtained from the transmitter side B3. Element e14 symbolizes a correlation, e.g. in the time domain, e.g. based on a detected sequence as obtained by the sequence detection e13.

Fig. 16 schematically depicts a simplified block diagram according to further exemplary embodiments, wherein bracket B3 symbolizes the transmitter side and bracket B4 symbolizes the receiver side, similar to Fig. 15. Elements e10, e11, e12, e13, e14 of Fig. 16 correspond with the elements e10, e11, e12, e13, e14 of Fig. 15, wherein, however, element e14 is arranged at the transmitter side B3 according to Fig. 16.

Fig. 17 schematically depicts a simplified signaling diagram according to further exemplary embodiments. Depicted are two terminal devices, e.g. UE, UE1, UE2. At time t0, UE1 receives channel information such as e.g. CSI feedback, that is provided by UE2, see element e20. Element e21 symbolizes bits, e.g. input bits, associated with data to be transmitted, for example organized in the form of a vector V. Element e22 symbolizes a trainable sequence generation, e.g. for mapping the bits of vector V to symbols. Element e23 symbolizes a trainable grid (resource) mapping, e.g. for mapping the symbols as obtained from element e22 to time/frequency resources RES (Fig. 2) of the wireless communications network 10. Element e24 symbolizes a generated sequence x, which, at time t1, is transmitted in the form of a signal sig-x within the time/frequency resources as e.g. obtained by element e23 to UE2. Element e25 symbolizes a received sequence y as obtained at the receiving UE2, based on the signal sig-x, wherein the received sequence y can e.g. be characterized by y = hx+n+interf, wherein h characterizes a radio channel associated with the transmission of the signal sig-x, wherein n characterizes noise, and wherein interf characterizes interference. Element e26 symbolizes a trainable receiver performing sequence estimation based on the received sequence y, e.g. determining bits for an output vector V^, and element e27 symbolizes a correlation receiver e.g. performing at least one procedure related to sensing, e.g. positioning, associated with the signal sig-x, e.g. an angle estimation, e.g. AoA, and or a ToF procedure, and the like.

Fig. 18 schematically depicts a simplified signaling diagram according to further exemplary embodiments, similar to Fig. 17. Elements UE1, UE2, e20, CH-I, t0, e21, e22, e23, e24, t1, sig-x, e25, e26 of Fig. 18 correspond to elements UE1, UE2, e20, CH-I, t0, e21, e22, e23, e24, t1, sig-x, e25, e26 of Fig. 17. Elements e27a, e27b of Fig. 18 symbolize correlation receivers, e.g. similar or identical to element e27 of Fig. 17. Element sig-x' symbolizes a reflected signal portion of the signal sig-x, which is presently reflected at an object OBJ, which may, in some embodiments, be another component of the wireless communication system 10, 10', or which may represent, in some other embodiments, another object e.g. not related to the wireless communication system 10, e.g. an obstacle such as a reflective structure, e.g. part of a building or vehicle or the like. Note that in some embodiments, e.g. depending on a relative position or distance between UE1 and the object OBJ, the time difference t2 - t1, e.g. the time difference between a receipt at time t2 of the reflected portion sig-x' at UE1 and between the transmission time t1 of the signal sig-x, may be, for example considerably, smaller than a time difference t3 - t1, wherein t3 characterizes a time of receipt of the signal sig-x at UE2. Thus, in some embodiments, it may be useful to provide for a decoupling of the transmit signal sig-x and the received reflected signal sig-x', e.g. using a separate receiver chain (not shown) for receiving the reflected portion sig-x'.

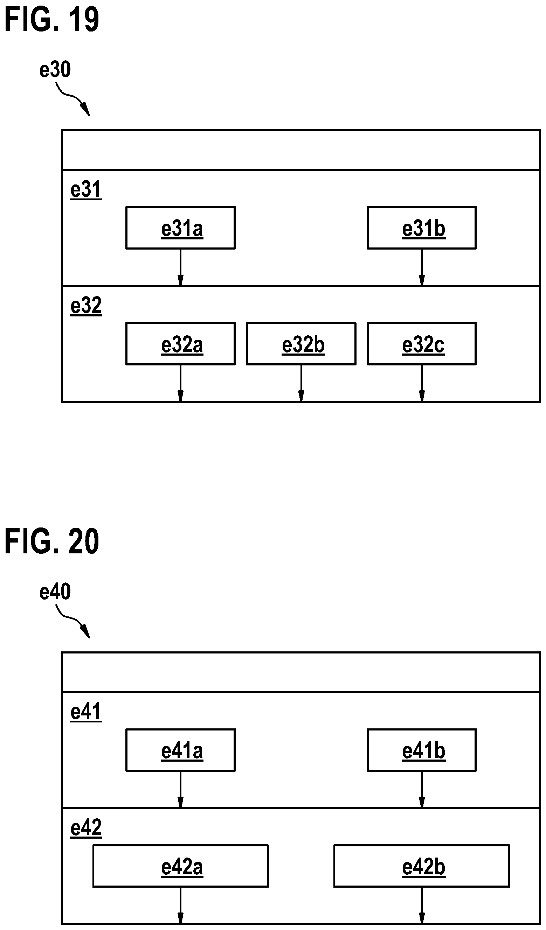

Fig. 19 schematically depicts a simplified block diagram according to exemplary embodiments, wherein element e30 symbolizes a transmitter, wherein element e31 symbolizes a bit-to-symbol mapping stage comprising a standard mapper e31a e.g. configured to perform a first type of, e.g. conventional, bit-to-symbol mapping, and a trainable mapper e31b configured to perform a second type of mapping, which is different from the first type of mapping, wherein the second type of mapping e.g. comprises a trainable mapping which can e.g. be trained, e.g. optimized, by using at least one machine learning technique ML-TECH, also see for example blocks 100, 100a, 100b of Fig. 1. Element e32 of Fig. 19 symbolizes a sequence generation stage, which comprises exemplarily three different sequence generation units e32a (e.g., a trained sequence generation unit), e32b (e.g., a channel code-based sequence generation unit), e32c (e.g., a random sequence based sequence generation unit).

Fig. 20 schematically depicts a simplified block diagram according to exemplary embodiments, wherein element e40 symbolizes a receiver, wherein element e41 symbolizes a sequence detection stage for determining a sequence identification e41a and a symbol sequence e41b. Element e42 symbolizes a positioning stage comprising a, for example trained, detector e42a and a correlation detector e42b.

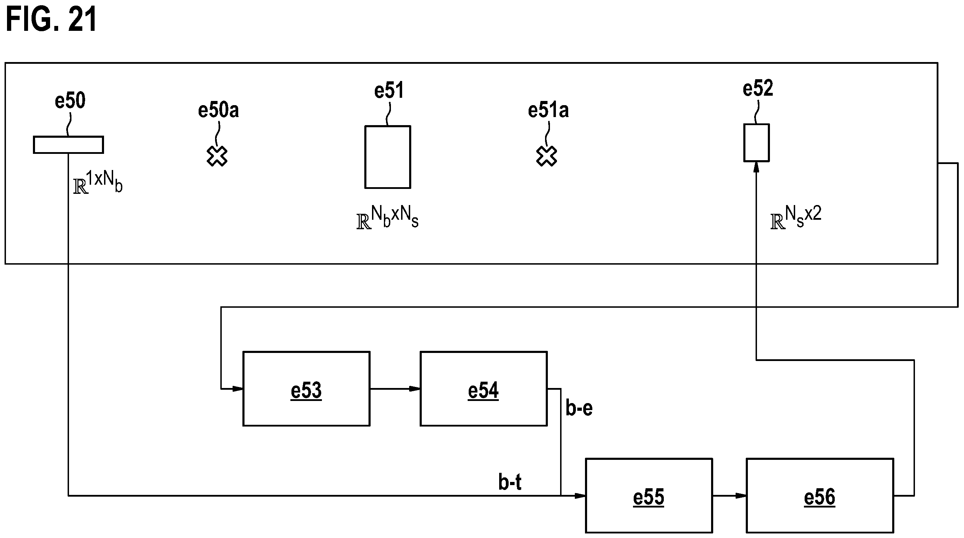

Fig. 21 schematically depicts a simplified block diagram according to further exemplary embodiments relating to an implementation of a training process. Element e50 symbolizes bits to be transmitted over a radio channel e53 using the wireless communications network 10, 10' (Fig. 2, 8), wherein the bits may e.g. be represented by an 1xN_{b} vector, e.g. a vector having N_{b} (number of bits) many elements. Element e50a symbolizes a mapping of the bits e50 to symbols e51, wherein the symbols may e.g. be represented by an N_{b}xN_{S} matrix, with Ns characterizing a number of symbols. In some embodiments, the mapping e50a may e.g. be performed using a multiplication of the 1xN_{b} vector with a symbol mapping matrix (not shown). Element e51a symbolizes a mapping of the symbols e51 to a constellation e52, e.g. using trainable weights, that may e.g. be trained using a backpropagation process e56 explained in detail further below. Element e54 symbolizes a receiver receiving a signal associated with the constellation e52 over the channel e53. Element e55 symbolizes a determination of a cross-entropy (CE) loss based on estimated bits b-e as obtained from the receiver e54 and on true bits b-t as obtained from element e50. Based on the CE loss e55, in some embodiments, the backpropagation process e56 may provide weight updates for modifying, e.g. optimizing, the trainable weights for the constellation e52.

In some embodiments, at least some aspects and/or portions of the exemplary configurations of any of Fig. 13 to Fig. 21 may e.g. be implemented using at least one apparatus 200, 200a, 200b (Fig. 7) as explained above with reference to Fig. 7.

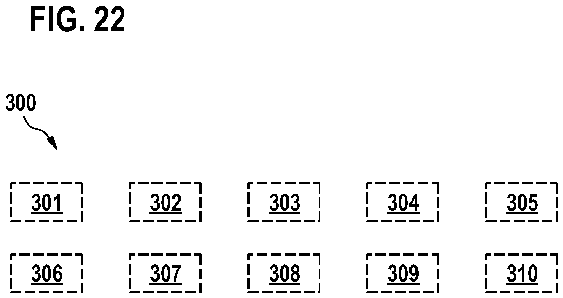

Further exemplary embodiments, Fig. 22, relate to a use 300 of the method according to the embodiments and/or of the apparatus 200, 200a, 200b according to the embodiments and/or of the terminal device 12, 12' according to the embodiments and/or of the network device 14 according to the embodiments and/or of the wireless communication system 10, 10' according to the embodiments and/or of the computer program PRG according to the embodiments and/or of the computer-readable storage medium SM according to the embodiments and/or of the data carrier signal DCS according to the embodiments for at least one of: a) modifying 301, for example optimizing 302, for example using at least one machine learning technique for, at least one of a1) the mapping MAP-BIT-SYM from bits associated with data to be transmitted over the wireless communications system 10, 10' to symbols, a2) the mapping MAP-SYM-RES of symbols to resources RES, RES' of the wireless communications system 10, 10', b) providing 303 a trainable device 12 for a or the the wireless communications system 10, 10' that is configured to learn and/or produce a signal, for example waveform, enabling joint communication and sensing, for example joint communication and positioning, c) providing 304 a trainable device 14, e.g. gNB, for a or the the wireless communications system 10, 10' that is configured to use a received signal for joint communication and sensing, for example joint communication and positioning, wherein for example the device 14 is trainable to modify, for example optimize, a detection of at least one sequence within the received signal and/or a correlation of the at least one sequence, for example with a reference sequence, d) providing 305 a trainable device 12, 12' for a or the the wireless communications system 10, 10' that is configured to receive at least one reflected portion sig1' of a transmitted first signal sig1, and to determine, based at least on the first signal and the reflected portion of the first signal, a distance dist between an object OBJ at which the least one reflected portion has been reflected and a device 12' that has transmitted the first signal, wherein for example the device is trainable to modify, for example optimize, a correlation of the reflected portion with the first signal, e) optimizing 306 a usage of the resources RES of the wireless communications network 10, 10' for transmitting signals, for example reference signals, that can be used for joint communication and sensing, for example joint communication and positioning, f) providing 307 a trainable resource grid mask for characterizing time and frequency resources RES' of the wireless communications network 10, 10' to be used for reference signals that are usable for joint communication and sensing, for example joint communication and positioning, g) simultaneously improving 308, for example optimizing, a performance of at least one device for the wireless communications network 10, 10' regarding both the first parameter P1 and the second parameter P2, h) considering 309 both the first parameter P1 and the second parameter P2 for, for example dynamically, optimizing at least one of h1) symbol values of symbols used for reference signals that are usable for joint communication and sensing, for example for joint communication and positioning, h2) resource elements used for reference signals that are usable for joint communication and sensing, for example for joint communication and positioning.

In some embodiments, the principle according to the embodiments may e.g. be used for, but is not limited to, joint communication and positioning for a plurality of terminal devices, see for example Fig. 9B, e.g. using sidelink PRS for joint communication and positioning.

## Claims

1. A method, for example a computer-implemented method, of processing data associated with at least one component (12, 14) of a wireless communications system (10; 10'), the method comprising: modifying (100, 102) at least one of a) a mapping (MAP-BIT-SYM) from bits (b) associated with data to be transmitted over the wireless communications system (10; 10') to symbols (x), b) a mapping (MAP-SYM-RES) of symbols (x) to resources (RES; RES') of the wireless communications system (10; 10'), based on at least one of: c1) a first parameter (P1) characterizing at least one performance indicator associated with a data transmission (A1) over the wireless communications system (10; 10'), c2) a second parameter (P2) characterizing at least one performance indicator associated with a positioning technique (POS-TECH) associated with the data transmission (A1) using the wireless communications system (10; 10').

2. The method according to claim 1, comprising using (104a) the symbols (x) for providing positioning reference signals, for example for joint communication and sensing, for example for joint communication and positioning, wherein for example the symbols (x) can be used for both communication and sensing, for example positioning.

3. The method according to at least one of the preceding claims, wherein the resources (RES; RES') of the wireless communications system (10; 10') comprise at least time resources and frequency resources.

4. The method according to at least one of the preceding claims, wherein the first parameter (P1) characterizes at least one of: a) a bit error rate, b) a symbol error rate.

5. The method according to at least one of the preceding claims, wherein the second parameter (P2) characterizes at least one of: a) correlation properties, b) autocorrelation properties, c) cross-correlation properties.

6. The method according to at least one of the preceding claims, comprising: considering (106) channel information (CH-I) of at least one radio channel (e5; e53) associated with the wireless communications system (10; 10') for a) the modifying (100) of the mapping (MAP-BIT-SYM) from bits (b) associated with data to be transmitted over the wireless communications system (10; 10') to symbols (x), and/or for b) the modifying (102) of the mapping (MAP-SYM-RES) of symbols (x) to resources (RES) of the wireless communications system (10; 10').

7. The method according to at least one of the preceding claims, comprising at least one of: a) modifying (100a), for example optimizing (100b), the mapping (MAP-BIT-SYM) from the bits (b) associated with the data to be transmitted over the wireless communications system (10; 10') to the symbols (x) using at least one machine learning technique (ML-TECH), b) modifying (102a), for example optimizing (102b), the mapping (MAP-SYM-RES) of the symbols (x) to the resources (RES) of the wireless communications system (10; 10') using at least one machine learning technique (ML-TECH).

8. The method according to at least one of the preceding claims, comprising: modifying (110), for example optimizing (110a), at least one of: a) a sequence detector (SD) for detecting a sequence based on data received via the wireless communications system (10; 10'), for example based on the data transmission (A1) over the wireless communications system (10; 10'), b) a correlation receiver (CR) for performing sensing, for example positioning.

9. The method of claim 8, comprising: using (110b) at least one machine learning technique (ML-TECH, ML-TECH') for the modifying (110), for example optimizing (110a), of the sequence detector (SD) and/or of the correlation receiver (CR), wherein for example at least one common machine learning technique (ML-TECH) is used for, for example jointly, performing a) at least one of the modifying (110), for example optimizing (110a), of the sequence detector (SD) and/or the correlation receiver (CR) and b) at least one of the modifying (100) of the mapping (MAP-BIT-SYM) from bits (b) associated with data to be transmitted over the wireless communications system (10; 10') to symbols (x) and the mapping (MAP-SYM-RES) of symbols (x) to resources (RES) of the wireless communications system (10; 10').

10. The method according to at least one of the preceding claims, comprising at least one of: a) transmitting (120) a first signal (sig1), for example positioning reference signal, for example for joint communication and sensing, for example for joint communication and positioning, using at least some of the symbols (x), b) receiving (122) at least one reflected portion (sig1') of the first signal (sig1), c) determining (124), based at least on the first signal (sig1) and the reflected portion (sig1') of the first signal (sig1), a distance between an object (OBJ) at which the least one reflected portion (sig1') has been reflected and a device (12) that has transmitted (120) the first signal (sig1).

11. A method, for example a computer-implemented method, of processing data associated with at least one component (12, 14) of a wireless communications system (10; 10'), the method comprising: modifying (150), for example optimizing (150a), at least one of: a) a sequence detector (SD) for detecting a sequence based on data received via the wireless communications system (10; 10'), for example based on a data transmission (A1) over the wireless communications system (10; 10'), b) a correlation receiver (CR) for performing sensing, for example positioning, wherein for example the method comprises: using (150b) at least one machine learning technique (ML-TECH, ML-TECH') for the modifying (150), for example optimizing (150a), of the sequence detector (SD) and/or of the correlation receiver (CR), wherein for example at least one common machine learning technique (ML-TECH) is used for, for example jointly, performing a) at least one of the modifying (150), for example optimizing (150a), of the sequence detector (SD) and/or the correlation receiver (CR) and b) at least one of modifying (100) a mapping (MAP-BIT-SYM) from bits (b) associated with data to be transmitted over the wireless communications system (10; 10') to symbols (x) and a mapping (MAP-SYM-RES) of symbols (x) associated with the data to be transmitted over the wireless communications system (10; 10') to resources (RES) of the wireless communications system (10; 10').

12. A method, for example a computer-implemented method, of processing data associated with at least one component (12, 14) of a wireless communications system (10; 10'), the method comprising at least one of: a) transmitting (160) a first signal (sig1; sig1a), for example positioning reference signal, for example for joint communication and sensing, for example for joint communication and positioning, using at least some of the symbols (x), b) receiving (162) at least one reflected portion (sig1'; sig1a') of the first signal (sig1), c) determining (164), based at least on the first signal (sig1) and the reflected portion (sig1') of the first signal (sig1), a distance between an object (OBJ) at which the least one reflected portion (sig1') has been reflected and a device (12) that has transmitted (160) the first signal (sig1).

13. Apparatus (200; 200a; 200b) configured to perform the method according to at least one of the preceding claims.

14. A wireless communication system (10; 10') comprising at least one apparatus (200; 200a; 200b) according to claim 13.

15. A computer program (PRG; PRG') comprising instructions which, when the program (PRG; PRG') is executed by a computer (202), cause the computer (202) to carry out the method according to at least one of the claims 1 to 12.

16. A use (300) of the method according to at least one of the claims 1 to 12 and/or of the apparatus (200; 200a; 200b) according to claim 13 and/or of the wireless communication system (10; 10') according to claim 14 and/or of the computer program (PRG) according to claim 15 and/or of a computer-readable storage medium (SM) comprising the computer program (PRG) according to claim 15 and/or of a data carrier signal (DCS) carrying and/or characterizing the computer program (PRG) according to claim 15 for at least one of: a) modifying (301), for example optimizing (302), for example using at least one machine learning technique (ML-TECH) for, at least one of a1) the mapping (MAP-BIT-SYM) from bits (b) associated with data to be transmitted over the wireless communications system (10; 10') to symbols (x), a2) the mapping (MAP-SYM-RES) of symbols (x) to resources (RES) of the wireless communications system (10; 10'), b) providing (303) a trainable device (12) for a or the the wireless communications system (10; 10') that is configured to learn and/or produce a signal, for example waveform, enabling joint communication and sensing, for example joint communication and positioning, c) providing (304) a trainable device (14) for a or the the wireless communications system (10; 10') that is configured to use a received signal for joint communication and sensing, for example joint communication and positioning, wherein for example the device (14) is trainable to modify, for example optimize, a detection of at least one sequence within the received signal and/or a correlation of the at least one sequence, for example with a reference sequence, d) providing (305) a trainable device (12') for a or the the wireless communications system (10; 10') that is configured to receive (122; 162) at least one reflected portion (sig1'; sig1a') of a transmitted first signal (sig1; sig1a), and to determine (124; 164), based at least on the first signal (sig1; sig1a) and the reflected portion (sig1'; sig1a') of the first signal (sig1; sig1a), a distance between an object (OBJ) at which the least one reflected portion (sig1'; sig1a') has been reflected and a device (12) that has transmitted (120) the first signal (sig1), wherein for example the device (12') is trainable to modify, for example optimize, a correlation of the reflected portion (sig1'; sig1a') with the first signal (sig1; sig1a), e) optimizing (306) a usage of the resources (RES) of the wireless communications network (10; 10') for transmitting signals, for example reference signals, that can be used for joint communication and sensing, for example joint communication and positioning, f) providing (307) a trainable resource grid mask for characterizing time and frequency resources of the wireless communications network (10; 10') to be used for reference signals that are usable for joint communication and sensing, for example joint communication and positioning, g) simultaneously improving (308), for example optimizing, a performance of at least one device (12, 14) for the wireless communications network (10; 10') regarding both the first parameter (P1) and the second parameter (P2), h) considering (309) both the first parameter (P1) and the second parameter (P2) for, for example dynamically, optimizing (310) at least one of h1) symbol values of symbols (x) used for reference signals that are usable for joint communication and sensing, for example for joint communication and positioning, h2) resource elements used for reference signals that are usable for joint communication and sensing, for example for joint communication and positioning.
